# FASCICULE DE BREVET EUROPEEN

(11) **EP 1 492 366 B1**
(45) Date de publication et mention de la délivrance du brevet: **06.12.2006**
(21) Numéro de dépôt: 04076715.4
(22) Date de dépôt: 11.06.2004
(51) Int. Cl.: H04Q 7/32, G07F 7/10

(54) **Système permettant de sécuriser des données transmises au moyen de téléphones mobiles programmables via un réseau de téléphonie mobile**
Sichere Datenübertragung von programmierbaren Mobiltelefonen in einem Mobilfunknetz
Secure data transmission by programmable mobile phones in a wireless network

(30) Priorité: 11.06.2003 FR 0306985
(43) Date de publication de la demande: 29.12.2004
(73) Titulaire: Ercom Engineering Réseaux Communications, 78140 Vélizy-Villacoublay (FR)
(72) Inventeur: Laubacher, Eric, 78180 Montigny Le Bretonneux (FR)
(74) Mandataire: Cases Thomas, Rafael Ildefonso

(56) Documents cités:
- FR-A- 2 809 555
- FR-A- 2 812 419
- FR-A- 2 817 107
- FR-A- 2 822 565
- US-A1- 2003 191 951
- KEHR R ET AL: "Mobile code as an enabling technology for service-oriented smarteard middleware" IEEE, 21 septembre 2000 (2000-09-21), pages 119-130, XP010514365

## Description

### Domaine technique de l'invention

La présente invention concerne un système permettant de sécuriser des données transmises au moyen d'un terminal du type téléphone mobile programmable via un réseau de téléphonie mobile en temps réel, la sécurisation des données à protéger étant obtenue grâce à la réalisation d'un cryptophone intégré au terminal.

### Etat de l'art

FR 2812419 décrit une carte utilisateur à microprocesseur, contenant plusieurs applications internes, dans un terminal. Un procédé sécurise l'accès d'une application externe à ladite carte. La réalisation d'un cryptophone intégré dans un terminal portable nécessite traditionnellement soit la modification du terminal portable, soit l'ajout d'un module matériel additionnel.

Dans les deux cas, ceci rend la réalisation d'un terminal muni d'un cryptaphone particulièrement difficile, et en pratique réservée au fabricant du terminal portable.

Dès lors, la compatibilité avec d'autres terminaux portables et la pérennité sont difficiles à assurer, d'autant que le marché de la cryptophonie est négligeable par rapport au marché des terminaux portables.

Par ailleurs, l'adjonction d'un module matériel additionnel alourdit notablement le poids du terminal portable, attire l'attention sur l'utilisateur, et rend l'utilisation du terminal portable plus difficile.

Finalement, il convient de noter qu'il est connu de crypter la communication entre un terminal et le réseau, mais, d'une part, un tel cryptage n'assure pas la sécurité de la communication entre deux terminaux et, d'autre part, le cryptage mis en oeuvre peut être insatisfaisant pour l'utilisateur du terminal.

Par opposition, un cryptophone est un dispositif permettant le cryptage d'une communication de « bout en bout », c'est-à-dire d'un terminal à un autre via le réseau.

### L'invention :

L'invention vise à remédier à au moins un des inconvénients précédemment mentionnés. Elle résulte de la constatation que la nouvelle génération de téléphones programmables donne l'opportunité de réaliser un cryptophone logiciel portable sur une grande variété de terminaux.

L'invention résulte aussi de la constatation qu'une approche purement logicielle de la cryptophonie n'est pas satisfaisante d'un point de vue sécurité, notamment en raison de l'absence de générateur aléatoire de bonne qualité, de protection contre la décompilation et contre l'accès aux éléments secrets, et ce malgré le faible coût de production d'un tel cryptophone logiciel.

C'est pourquoi, l'invention concerne un système permettant de sécuriser des données confidentielles transmises au moyen de téléphones mobiles programmables via un réseau de téléphonie mobile. Les données confidentielles se présentent notamment sous la forme d'informations multimédia telles que du type voix, télécopie, image et/ou vidéo. Les téléphones mobiles programmables conformes à l'invention sont caractérisés en ce qu'ils comportent :
- une application logicielle de cryptophonie,
- un module de sécurité comprenant des algorithmes de cryptographie.

Ce module de sécurité est caractérisé en ce qu'il comporte :
- des informations secrètes mémorisées,
- un module logiciel dédié.

Le module logiciel dédié est notamment destiné à :
- générer et transmettre à l'application logicielle de cryptophonie des clés de session destinées au chiffrement et/ou au scellement des informations confidentielles, et/ou
- authentifier les téléphones mobiles programmables, et/ou
- chiffrer les informations confidentielles sans communiquer de clés de session à l'application de cryptophonie.

L'invention permet donc de réaliser un cryptophone intégré à un terminal portable et programmable en garantissant un haut niveau de sécurité, puisqu'elle utilise des éléments physiques (hardware) dédiés à la sécurité, et un faible coût, puisqu'elle utilise des éléments physiques (hardware) déjà produits en grand nombre pour le marché de la téléphonie mobile.

Elle consiste à utiliser une application sur mesure introduite dans le module de sécurité du terminal portable, ladite application sur mesure étant mise à profit par une application de cryptophonie installée dans le terminal portable programmable.

Ainsi, on obtient un haut niveau de sécurité, à l'aide d'algorithmes traditionnels de cryptographie fournis par le module de sécurité et utilisables par l'application sur mesure, et par le stockage des éléments secrets nécessaires à application sur mesure dans le module de sécurité.

Selon des cas particuliers de réalisation, la contribution de l'application sur mesure à la sécurisation globale du système peut consister à :
- réaliser la génération de clés de session, pour le chiffrement et/ou le scellement des informations, ces clés de session pouvant être fournies à l'application de cryptophonie,
- en complément, assurer l'authentification des terminaux, soit indirectement l'authentification des utilisateurs,
- en complément, réaliser le chiffrement du flux d'information, sans nécessité de communication de clés de session à l'application de cryptophonie.

Dans une réalisation, le module de sécurité est une carte à puce.

Selon une réalisation, la carte à puce est destinée à identifier l'utilisateur et/ou le terminal.

Dans une réalisation, la carte à puce dispose d'une machine virtuelle Java.

Selon une réalisation, le module logiciel dédié est une applet.

Dans une réalisation, les informations secrètes mémorisées comprennent des clés privées d'authentification.

L'invention concerne aussi une carte à puce destinée à la sécurisation des données confidentielles transmises au moyen de téléphones mobiles programmables via un réseau de téléphonie mobile, les données confidentielles se présentant notamment sous la forme d'informations multimédia telles que de la voix, de la télécopie, de l'image ou de la vidéo, cette carte à puce comprenant des algorithmes de cryptographie comportant :
- des informations secrètes mémorisées,
- un module logiciel dédié,

Le module logiciel dédié étant notamment destiné à travailler avec une application logicielle de cryptophonie comprise dans un terminal mobile programmable pour:
- générer et transmettre à l'application logicielle de cryptophonie des clés de session destinées au chiffrement et/ou au scellement des informations confidentielles, et/ou
- authentifier les téléphones mobiles programmables, et/ou
- chiffrer les informations confidentielles sans communiquer de clés de session à l'application de cryptophonie.

L'invention concerne également un terminal mobile programmable destiné à la transmission sécurisée de données confidentielles via un réseau de téléphonie mobile, les données confidentielles se présentant notamment sous la forme d'informations multimédia telles que de la voix, de la télécopie, de l'image ou de la vidéo, ce terminal mobile programmable comportant :
- une application logicielle de cryptophonie,
- un carte à puce conforme à la revendication 8.

L'invention concerne encore un procédé destiné à la sécurisation des données confidentielles transmises au moyen de téléphones mobiles programmables via un réseau de téléphonie mobile, les données confidentielles se présentant notamment sous la forme d'informations multimédia telles que de la voix, de la télécopie, de l'image ou de la vidéo, les téléphones mobiles programmables comportant :
- une application logicielle de cryptophonie,
- un module de sécurité comprenant des algorithmes de cryptographie comportant :
   - des informations secrètes mémorisées,
   - un module logiciel dédié,

Le module logiciel dédié étant notamment destiné à :
- générer et transmettre à l'application logicielle de cryptophonie des clés de session destinées au chiffrement et/ou au scellement des informations confidentielles, et/ou
- authentifier les téléphones mobiles programmables, et/ou
- chiffrer les informations confidentielles sans communiquer de clés de session à l'application de cryptophonie.

Finalement, l'invention concerne des données confidentielles transmises au moyen de téléphones mobiles programmables via un réseau de téléphonie mobile, ces données confidentielles se présentant notamment sous la forme d'informations multimédia telles que de la voix, de la télécopie, de l'image ou de la vidéo, les téléphones mobiles programmables transmettant ces données selon un procédé conforme à l'invention.

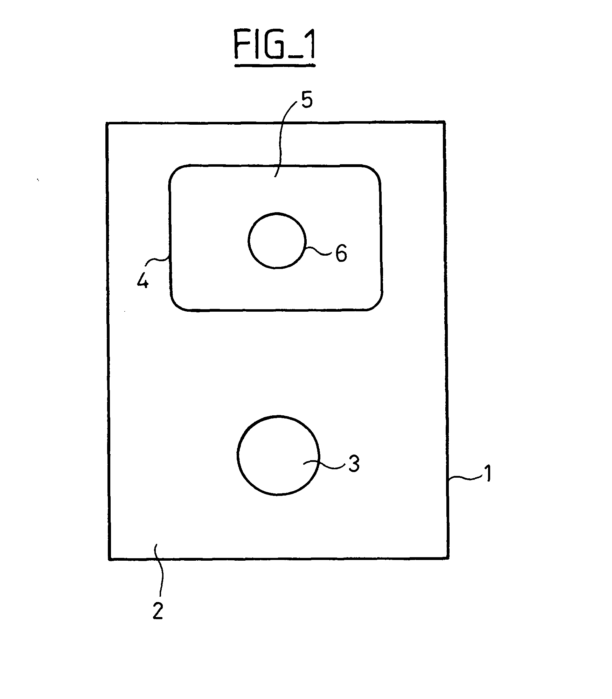

D'autres caractéristiques et avantages de l'invention apparaîtront avec la description d'une réalisation de l'invention effectuée ci-dessous, à titre illustratif et non limitatif, à l'aide de la figure 1 ci-jointe qui représente schématiquement une mise en oeuvre de l'invention.

Sur cette figure 1, le procédé met en oeuvre un terminal programmable du type téléphone portable 1, disposant d'un environnement de programmation 2, dans lequel est exécutée l'application de cryptophonie 3, et contenant une carte SIM 4, elle-même munie d'un environnement de programmation 5, dans lequel est exécutée une application logicielle sur mesure, ou "l'applet" 6.

Un tel téléphone peut ainsi transmettre - réception ou émission - des données confidentielles du type voix, télécopie, image ou vidéo cryptés en temps réel au moyen de son cryptophone.

A cet effet, l'applet 6 utilise les moyens cryptographiques du module de sécurité, c'est-à-dire de la carte SIM 4, pour mettre en oeuvre au moins un algorithme de cryptographie et des informations secrètes mémorisés, tels que des clés privées d'authentification.

Selon des cas particuliers de réalisation, la contribution de l'application sur mesure ("l'applet") à la sécurisation globale du système peut consister à :
- réaliser la génération de clés de session, pour le chiffrement et/ou le scellement des informations, ces clés de session pouvant être fournies à l'application de cryptophonie,
- en complément, assurer l'authentification des terminaux, soit indirectement l'authentification des utilisateurs,
- en complément, réaliser le chiffrement du flux d'information, sans nécessité de communication de clés de session à l'application de cryptophonie.

Le procédé selon l'invention est ainsi particulièrement destiné à la protection des conversations téléphoniques gouvernementales et des hautes personnalités vis-à-vis du risque d'interception par des adversaires puissants.

Il convient également à la protection des transmissions de données et de télécopies réalisées au moyen de terminaux programmables portables ainsi qu'aux réseaux de transmission par paquets.

IL convient de noter que la présente invention est susceptible de nombreuses variantes étant entendu qu'elle peut avantageusement être mise en oeuvre dans tout type de moyen de communication muni d'une carte à puce du type carte SIM.

## Revendications

1. Système destiné à la sécurisation des données confidentielles transmises au moyen de téléphones mobiles (1) programmables via un réseau de téléphonie mobile, les données confidentielles se présentant notamment sous la forme d'informations de type voix, ou télécopie, les téléphones mobiles programmables comportant :
- une application (3) logicielle de cryptophonie,
- un module (4) de sécurité comprenant des algorithmes de cryptographie comportant :
- des moyens de stockage d'éléments secrets,
- un module (6) logiciel dédié,
le module logiciel comportant:
- des moyens pour générer et transmettre à l'application logicielle de cryptophonie des clés de session destinées au chiffrement et/ou au scellement des informations confidentielles, et/ou
- des moyens pour authentifier les téléphones mobiles programmables, et/ou
- des moyens pour chiffrer les informations confidentielles sans communiquer de clés de session à l'application de cryptophonie.

2. Système selon la revendication 1 dans lequel les données confidentielles se présentent sous la forme d'informations multimédia telles que de l'image et/ou de la vidéo.

3. Système selon la revendication 1 ou 2 **caractérisé en ce que** le module de sécurité (4) est une carte à puce.

4. Système selon la revendication 3 **caractérisé en ce que** la carte à puce (4) est destinée à identifier l'utilisateur du terminal et/ou le terminal.

5. Système selon la revendication 4 **caractérisé en ce que** la carte à puce (4) dispose d'une machine virtuelle Java.

6. Système selon l'une des revendications précédentes **caractérisé en ce que** le module logiciel (6) dédié est une applet.

7. Système selon l'une des revendications précédentes **caractérisé en ce que** les informations secrètes mémorisées comprennent des clés privées d'authentification.

8. Carte à puce (4) destinée à la sécurisation des données confidentielles transmises au moyen de téléphones mobiles programmables (1) via un réseau de téléphonie mobile, les données confidentielles se présentant notamment sous la forme d'informations de type voix, ou télécopie, de l'image ou de la vidéo, cette carte à puce comprenant des algorithmes de cryptographie comportant :
- des moyens de stockage d'éléments secrets,
- un module logiciel dédié (6),
le module logiciel dédié (6) étant destiné à travailler avec une application logicielle de cryptophonie comprise dans un terminal mobile programmable et comportant des moyens pour:
- générer et transmettre à l'application logicielle de cryptophonie des clés de session destinées au chiffrement et/ou au scellement des informations confidentielles, et/ou
- authentifier les téléphones mobiles programmables, et/ou
- chiffrer les informations confidentielles sans communiquer de clés de session à l'application de cryptophonie.

9. Carte à puce selon la revendication 8 dans laquelle les données confidentielles se présentent sous la forme d'informations multimédia telles que de l'image et/ou de la vidéo.

10. Terminal mobile programmable (1) destiné à la transmission sécurisée de données confidentielles via un réseau de téléphonie mobile, les données confidentielles se présentant notamment sous la forme d'informations e type voix, ou télécopie, ce terminal mobile programmable comportant :
- une application logicielle de cryptophonie,
- un carte à puce (4) conforme à la revendication 8 ou 9.

11. Terminal mobile selon la revendication 10 dans lequel les données confidentielles se présentent sous la forme d'informations multimédia telles que de l'image et/ou de la vidéo.

12. Procédé destiné à la sécurisation des données confidentielles transmises au moyen de téléphones mobiles programmables (1) via un réseau de téléphonie mobile, les données confidentielles se présentant notamment sous la forme d'informations e type voix, ou télécopie, les téléphones mobiles programmables comportant :
- une application logicielle de cryptophonie,
- un module de sécurité (4) comprenant des algorithmes de cryptographie comportant :
- des moyens de stockage d'éléments secrets,
- un module logiciel dédié (6),
le module logiciel dédié (6) étant destiné à :
- générer et transmettre à l'application logicielle de cryptophonie des clés de session destinées au chiffrement et/ou au scellement des informations confidentielles, et/ou
- authentifier les téléphones mobiles programmables, et/ou
- chiffrer les informations confidentielles sans communiquer de clés de session à l'application de cryptophonie.

13. Procédé selon la revendication 12 dans lequel les données confidentielles se présentent sous la forme d'informations multimédia telles que de l'image et/ou de la vidéo.

## Claims

1. System for securing confidential data transmitted by programmable mobile telephones (1) via a cellular phone network, said confidential data taking the form of vocal or fax data, and the programmable mobile phones including:
- a ciphonic software application (3),
- a security module (4) including cryptographic algorithms including:
- means for storing secret information,
- a dedicated software module (6),
- the software module including:
- means for generating and transmitting to the ciphonic software application session keys for the purpose of encrypting and/or hashing confidential information and/or
- means for authenticating programmable mobile telephones and/or:
- means for encrypting confidential information without communicating session keys to the ciphonic application.

2. System according to claim 1 wherein the confidential data are presented in the form of multimedia information such as images and/or video.

3. System according to claims 1 or 2 wherein the security module is a smart card (4).

4. System according to claim 3 wherein the smart card (4) is used to identify the user of the terminal and/or the terminal.

5. System according to claim 4 wherein the smart card (4) is equipped with a virtual Java machine.

6. System according to any one of the above claims wherein the dedicated software module (6) is an applet.

7. System according to any of the above claims wherein the memorised secret information includes private authentication keys.

8. Smart card (4) for securing confidential information transmitted by means of programmable mobile telephones (1) via a cellular telephony network, the confidential data taking the form of vocal, fax, image or video information, and the said smart card including cryptographic algorithms including:
- means for store secret information,
- a dedicated software module (6),
the dedicated software module (6) being for the purpose of operating with a ciphonic software application included in a programmable mobile terminal and including means for:
- generating and transmitting to the ciphonic software application session keys that encrypt and/or hash confidential information and/or
- authenticating programmable mobile telephones and/or
- encrypting the confidential information without communicating session keys to the ciphonic application.

9. Smart card according to claim 8 wherein the confidential data takes the form of multimedia information such as images and/or video.

10. Programmable mobile terminal (1) for the secure transmission of confidential data via a cellular phone network, said confidential data notably taking the form of voice or fax type information, said programmable mobile terminal including:
- a ciphonic software application,
- a smart card (4) as set forth in claim 8 or 9.

11. Mobile terminal according to claim 10 in which the confidential data takes the form of multimedia information such as images and/or video.

12. Process for the securing of confidential data transmitted by means of programmable mobile telephones (1) via a cellular phone network, the confidential data notably taking the form of voice or fax type information, the said programmable mobile telephones including:
- a cryptographic software application,
- a security module (4) including cryptography algorithms including:
- means for storing secret information,
- a dedicated software module (6), the dedicated software module (6) serving the purpose of:
- generating and transmitting to the ciphonic software application session keys that encrypt and/or hash confidential information and/or
- authenticating programmable mobile telephones and/or
- encrypting the confidential information without communicating session keys to the ciphonic application.

13. Process according to claim 12 in which confidential data takes the form of multimedia information such as images and/or video.

## Patentansprüche

1. System zur Sicherung der mittels über ein Mobiltelefonnetz programmierbarer Mobiltelefone (1) übertragenen vertraulichen Daten, die sich u.a. als Sprach- oder Faxdaten darstellen, wobei die programmierbaren Mobiltelefone Folgendes beinhalten:
- eine Kryptophonie-Softwareanwendung (3),
- ein Sicherheitsmodul (4), das Kryptographie-Algorithmen mit folgenden Elementen enthält:
- ein Speichermittel für Geheimelemente,
- ein dediziertes Softwaremodul (6),
wobei das Softwaremodul folgende Elemente beinhaltet:
- Mittel zur Erzeugung der Sitzungsschlüssel für die Verschlüsselung und/oder Versiegelung der vertraulichen Daten und zu ihrer Übertragung an die Kryptophonie-Softwareanwendung und/oder
- Mittel zur Authentifizierung der programmierbaren Mobiltelefone und/oder
- Mittel zur Verschlüsselung der vertraulichen Informationen ohne Kommunikation von Sitzungsschlüsseln an die Kryptophonie-Anwendung.

2. System nach Anspruch 1, in dem sich die vertraulichen Daten in Form multimedialer Informationen wie z.B. Bilder und/oder Filme darstellen.

3. System nach Anspruch 1 oder 2, **dadurch gekennzeichnet, dass** es sich bei dem Sicherheitsmodul um eine Chipkarte handelt.

4. System nach Anspruch 3, **dadurch gekennzeichnet, dass** die Chipkarte (4) dazu bestimmt ist, den Benutzer des Terminals und/oder das Terminal zu identifizieren.

5. System nach Anspruch 4, **dadurch gekennzeichnet, dass** die Chipkarte (4) über eine virtuelle Java-Maschine verfügt.

6. System nach einem der vorigen Ansprüche, **dadurch gekennzeichnet, dass** es sich bei dem Softwaremodul (6) um ein Applet handelt.

7. System nach einem der vorigen Ansprüche, **dadurch gekennzeichnet, dass** die gespeicherten geheimen Informationen private Authentifizierungsschlüssel enthalten.

8. Chipkarte (4) zur Sicherung der mittels über ein Mobiltelefonnetz programmierbarer Mobiltelefone (1) übertragenen vertraulichen Daten, bei denen es sich u.a. um Sprach- oder Faxdaten, Bilder oder Filme handelt, wobei diese Chipkarte Kryptographie-Algorithmen enthält, die Folgendes beinhalten:
- Speichermittel für Geheimelemente,
- ein dediziertes Softwaremodul (6),
wobei das dedizierte Softwaremodul (6) dazu bestimmt ist, mit einer Kryptophonie-Softwareanwendung zu arbeiten, die in einem programmierbaren Mobilterminal enthalten ist und Mittel beinhaltet:
- um Sitzungsschlüssel für die Verschlüsselung und/oder Versiegelung der vertraulichen Daten zu generieren und an die Kryptophonie-Softwareanwendung zu übertragen, und/oder
- um die programmierbaren Mobiltelefone zu authentifizieren und/oder
- um die vertraulichen Informationen ohne Kommunikation von Sitzungsschlüsseln an die Kryptophonie-Anwendung zu verschlüsseln.

9. Chipkarte nach Anspruch 8, bei der sich die vertraulichen Daten in Form multimedialerer Informationen wie Bilder und/oder Filme darstellen.

10. Programmierbares Mobilterminal (1) zur sicheren Übertragung vertraulicher Daten über ein Mobiltelefonnetz, wobei sich die vertraulichen Daten u.a. in Form von Sprach- oder Faxdaten darstellen, und wobei das programmierbare Mobilterminal Folgendes beinhaltet:
- eine Kryptophonie-Softwareanwendung,
- eine Chipkarte (4) gemäß Anspruch 8 oder 9.

11. Mobilterminal nach Anspruch 10, bei dem sich die vertraulichen Daten in Form multimedialer Informationen wie z.B. Bilder und/oder Filme darstellen.

12. Verfahren zur Sicherung der mittels über ein Mobiltelefonnetz programmierbarer Mobiltelefone (1) übertragenen vertraulichen Daten, bei denen es sich u.a. um Sprach- oder Faxdaten handelt, wobei die programmierbaren Mobiltelefone Folgendes beinhalten:
- eine Kryptophonie-Softwareanwendung,
- ein Sicherheitsmodul (4), das Kryptographie-Algorithmen mit folgenden Elementen enthält:
- Speichermittel für Geheimelemente,
- ein dediziertes Softwaremodul (6),
wobei Letzteres dazu bestimmt ist,
- Sitzungsschlüssel für die Verschlüsselung und/oder Versiegelung der vertraulichen Daten zu generieren und an die Kryptophonie-Softwareanwendung zu übertragen, und/oder
- die programmierbaren Mobiltelefone zu authentifizieren und/oder
- vertrauliche Informationen ohne Kommunikation von Sitzungsschlüsseln an die Kryptophonie-Anwendung zu verschlüsseln.

13. Verfahren nach Anspruch 12, bei dem sich die vertraulichen Daten in Form multimedialer Informationen wie z.B. Bilder und/oder Filme darstellen.
